# EUROPEAN PATENT APPLICATION

(11) **EP 1 950 025 A1**
(43) Date of publication of application: **30.07.2008**
(21) Application number: 08101031.6
(22) Date of filing: 29.01.2008
(51) Int. Cl.: B29C 45/14, B65D 1/24

(54) **Plastic container with in-mould label**

(30) Priority: 29.01.2007 NL 2000458
(71) Applicant: D W Plastics N.V., 3740 Bilzen (BE)
(72) Inventor: Willems, Gert Louis Clement, 3012 Wilsele (BE); Isenborghs, Francis, 1350 Jauche (BE)
(74) Representative: van Westenbrugge, Andries

(57) **Abstract**

The invention relates to a plastic container (1) having side walls that extend substantially at right angles from a bottom and which is provided on the outer surface of at least two adjoining side walls with labelling, the labelling comprising two labels (13) which, at the corner where the adjoining side walls adjoin one another, border one another substantially seamlessly.

The invention furthermore relates to a device for injection-moulding a plastic object (1) provided with a label (13), which device comprises an injection mould, a label-application means for applying at least one label in the mould to a mould wall, and a label-treating means for making the label fit after it has been applied to the mould wall.

The invention furthermore relates to a method for injection-moulding a plastic container (1), such as a plastic crate, provided with an in-mould label (13) on an outer surface thereof, in which a substantially plastic label is applied in a mould cavity to a mould wall and held thereon, the edges of the label are treated in order to make the label fit, following which the mould is closed and the plastic is introduced.

## Description

### Background of the invention

The invention relates to a plastic container provided with labelling.

The invention furthermore relates to a device for injection-moulding a plastic object provided with an in-mould label.

The invention furthermore relates to a method for injection-moulding a plastic container provided with an in-mould label.

Patent EP-A1-1,563,980 by the Applicant discloses a plastic crate provided with what is referred to as an in-mould label or tag. In this case, a label is placed in an injection mould and the injection mould is closed, following which the crate is formed. A known problem in the manufacture of such crates is the fact that the labels often do not fit well in the corners. In this publication, this problem is solved by applying a label around the inside of a corner in a crate.

A further problem, which is also mentioned in said patent application, is providing a crate with a continuous in-mould label. A solution offered is to provide a closed continuous label which surrounds the entire crate.

Another problem which occurs is that when several labels are used these labels do not neatly join onto one another. Therefore, a gap is usually left between the various labels of generally at least 2-5 mm.

### Summary of the invention

It is an object of the invention to provide a device and a method for injection-moulding a plastic object provided with an in-mould label.

It is a further object of the invention to provide an alternative for covering the corners of a plastic container with labels, and/or to provide labels in the corners.

Furthermore, it is an object to provide a method and device for injection-moulding a plastic object with adjoining labels, and/or a well-fitting label.

It is a further and/or alternative object of the invention to provide a reliable production process for injection-moulding an object with an in-mould label.

It is a further and/or alternative object of the invention to provide an alternative for surrounding labels.

It is a further and/or alternative object of the invention to improve the positioning of labels in an injection-moulding process.

It is a further and/or alternative object of the invention to provide an alternative for a continuous label.

To this end, the invention provides a plastic container having side walls that extend substantially at right angles from a bottom and which is provided on the outer surface of at least two adjoining side walls with labelling, the labelling comprising two labels which, at the corner where the adjoining side walls adjoin one another, border one another substantially seamlessly.

To this end, the invention furthermore provides a device for injection-moulding a plastic object provided with a label, which device comprises an injection mould, a label-application means for applying at least one label in the mould to a mould wall, and a label-treating means for making the label fit after it has been applied to the mould wall.

To this end, the invention furthermore provides a method for injection-moulding a plastic container, such as a plastic crate, provided with an in-mould label on an outer surface thereof, in which a substantially plastic label is applied in a mould cavity to a mould wall and held thereon, the edges of the label are treated in order to make the label fit, following which the mould is closed and the plastic is introduced.

Due to the fact that the labels border one another seamlessly, a durable and visually appealing labelling is produced which runs smoothly, even at mould transitions.

Especially with crates for, for example, bottles, the application and positioning of the labels is critical, as such crates generally have straight and flat side walls. The application of the in-mould labels in a straight and flat manner is very important because of the fact that deviations are quickly apparent. This may have a negative impact on the reputation of the producer of the contents of the crates with his customers and consumers. In addition, such crates, in particular for bottles, such as beer crates, are subject to frequent and heavy use. An imperfection in the application in an injection mould may result in unsatisfactory attachment or loose edges. Due to the heavy use of the crates, this may result in damage or failures during the commonly automated processing of the crates.

A label as described above comprises a substantially plastic laminate which is provided with an image, logo, or the like and covered by a protective layer. Such labels are also known to those skilled in the art. An example of a label which can be used is described in WO-A1-00/42591 by the Applicant. The in-mould labels become an integral part of the plastic object.

In an embodiment of the plastic container, the plastic container has four side walls which are each provided with labelling which, at the corners where the side walls abut one another, border one another substantially seamlessly so as to produce an apparently seamless continuous label. This results in a crate with a durable and visually appealing labelling.

In an embodiment of the plastic container, the side walls of the plastic container are substantially rectangular, which improves the stackability of the crates.

In an embodiment of the plastic container, the side walls have a wall part which is substantially in one plane at the location of the labels and thus facilitates the application of the labels.

In an embodiment of the plastic container, the labels are substantially rectangular. As a result thereof, the surface area is covered in an advantageous manner.

In an embodiment of the plastic container, the adjoining side walls are at an angle of less than approximately 90 degrees to one another, in a further embodiment the angle with respect to one another is approximately 90 degrees.

In an embodiment of the plastic container, the labels and an edge adjoin one another, in a further embodiment adjoin one another with a straight side, in a further embodiment abut one another.

In an embodiment of the device for injection-moulding a plastic object provided with a label, the label-treating means is furthermore designed for treating the periphery of the at least one label. In this way, the label can be adapted to the mould wall.

In an embodiment of the device for injection-moulding a plastic object provided with a label, the label-treating means is designed for folding or bending at least one edge of a label. In a further embodiment, the label-treating means is designed for folding towards the interior of a mould cavity in the mould. This results in the label being completely incorporated into the injection-moulded form. After the label has been adapted, no residues of the label remain in the mould and the risk of contamination of the process and disruption is consequently reduced.

In an embodiment of the device for injection-moulding, the label-treating device is designed for folding in such a manner that an edge of a label ends up between mould parts.

In an embodiment of the device for injection-moulding, the label-treating means comprises a cutting means for cutting the edges off a label. As a result, the redundant edges of a label can be removed.

In an embodiment of the device for injection-moulding, the mould comprises mould parts which come together so as to enclose an injection-moulding cavity or mould cavity, and one or more of the mould parts which come together after a label has been applied comprise cutting parts, in particular mould parts which clamp together comprise cooperating cutting parts for cutting an edge off a label. As the cutting parts are incorporated in the mould parts, no separate cutting tools are necessary. In addition, this is advantageous with respect to the accuracy of the adaptation of a label as the mould parts determine both the injection-moulded form and the dimensions of a label.

In an embodiment of the device for injection-moulding, the label-positioning device comprises a robot arm for lifting and applying a label.

In an embodiment of the device for injection-moulding, the robot arm is furthermore provided with a cutting means for cutting a label. By using external cutting means, the mould can be produced and maintained in a relatively simple manner.

In an embodiment of the device for injection-moulding, at least one of the mould parts is provided with a guide means for guiding the robot arm along the interior of the mould. As a result thereof, the accuracy of the adaptation of a label is improved.

In an embodiment of the device for injection-moulding, the cutting means comprise a knife or a contactless cutting part, such as a laser knife.

In an embodiment of the method for injection-moulding a plastic container, an edge of the label is cut off during the treatment of the edges.

In an embodiment of the method for injection-moulding a plastic container, an edge of the label is folded during the treatment of the edges.

In an embodiment of the method for injection-moulding a plastic container, the edge is folded into the mould cavity during folding of an edge, with the folded edge extending into the mould cavity.

In an embodiment of the method for injection-moulding a plastic container, the edges are folded in such a manner that they end up between the mould parts when the mould is closed.

In an embodiment of the method for injection-moulding a plastic container, the mould comprises mould parts, the mould parts being brought into contact with one another in order to delimit the mould cavity, the mould parts being provided with cooperating cutting parts which cut the label when the mould parts are being closed.

In an embodiment, the invention relates to a device provided with one or more of the characterizing measures described in the attached description and/or illustrated in the attached drawings.

The invention furthermore relates to a method comprising one or more of the characterizing steps described in the accompanying description and/or illustrated in the accompanying drawings.

It will be clear that the various aspects mentioned in the present patent application can be combined with one another or can each individually be considered for a divisional patent application.

### Brief description of the figures

The attached figures illustrate various embodiments of a device for injection-moulding and a plastic container according to the invention, in which:
Fig. 1 shows a plastic bottle crate;
Fig. 2 shows a top view of a mould for a plastic crate;
Fig. 3 shows two mould parts provided with cutting parts and with labels;
Fig. 4 shows two mould parts and a cutting/folding means.

### Description of embodiments

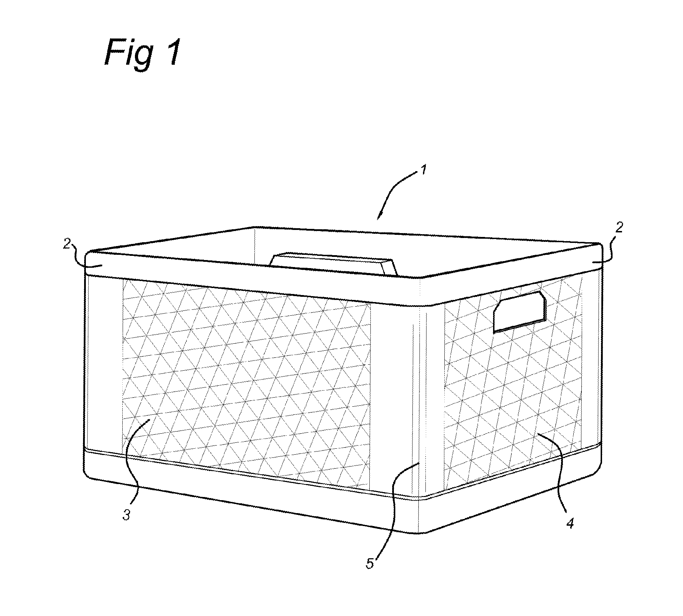

Fig. 1 shows a plastic bottle crate 1 as a particular embodiment of a plastic container. For such a bottle crate with flat and straight walls and corners of substantially 90 degrees, the present invention offers in particular the abovementioned advantages.

The bottle crate 1 comprises a plastic body 2, usually made of polyethylene (PE), in particular HDPE. Other suitable plastics which are known to those skilled in the art may also be used. The plastic crate 1 is provided with labels 3, 4 which in this case enclose the crate. At seam 5, the straight sides of the two labels substantially seamlessly adjoin at a corner of the crate. As a result, it is not necessary to use a continuous strip-like label which is not easy to handle and apply.

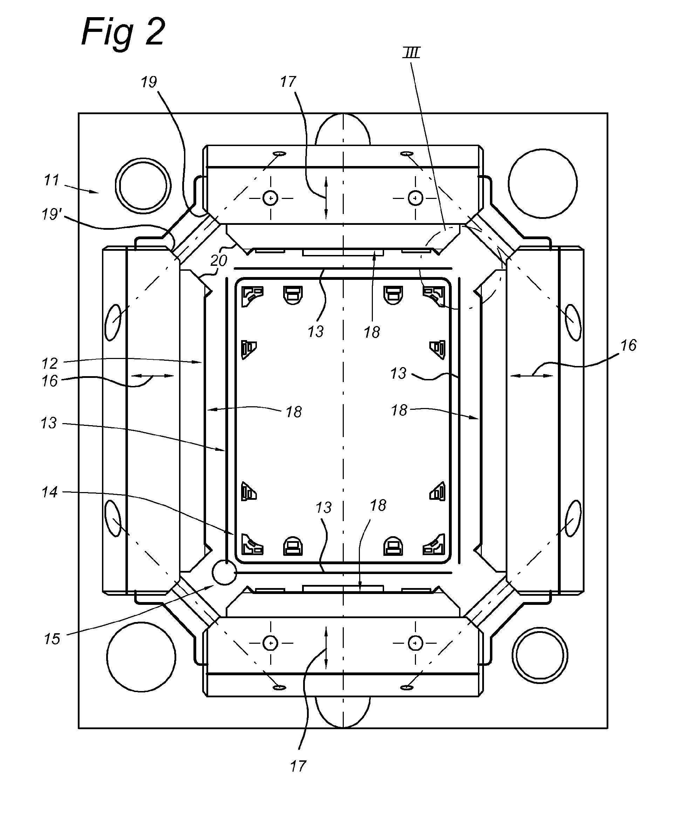

Fig. 2 shows a top view of a mould which is known per se which is used to injection-mould such a bottle crate from Fig. 1 in a manner known per se. Such a mould has a bottom mould part 11 and four wall mould parts 12 which can be moved towards one another (also referred to as mould trays). The wall mould parts then move in the direction of the arrows 16, 17. The sides 19, 19' and 20 are then pressed together so that the plastic cannot escape during injection-moulding. Number 14 indicates the spot where the outer wall of the bottle crate will be formed during injection-moulding.

The so-called male mould part which can be lowered inside the wall mould parts 12 and is provided with a lid mould part is not illustrated here.

The figure also shows four labels 13 which are to be applied to the surfaces 18 of the walls of the wall mould parts 12. It is known and usual for this to be carried out by means of a robot arm, which is not illustrated in any more detail. The labels are then held against the surfaces 18 of the wall mould parts 12 by means of underpressure ("partial vacuum"), electrostatically, or in another manner which is known per se to the person skilled in the art. Usually, application is very important and has to be carried out very accurately, in particular if a label has substantially the same length as the wall mould parts. Usually, said length is 4-10 mm less than that of wall mould parts 12 in order to prevent application errors which may lead to malfunctions or bottle crates being rejected. Circle 15 shows how the labels have to fit substantially exactly in a corner. The circle in the top right-hand corner shows a detail which is shown on an enlarged scale in the subsequent figures in order to illustrate embodiments of the invention.

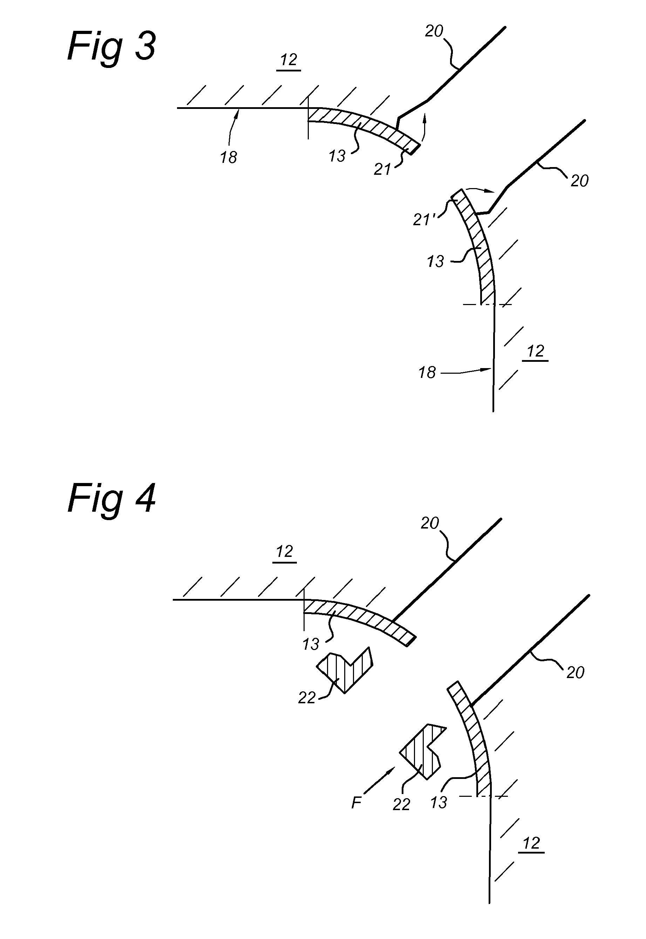

Fig. 3 shows a detailed top view of the circled part from the top right-hand side in Fig. 2. Labels 13 are applied to the surfaces 18 of the wall mould parts 12. Each of the labels 13 extends beyond the plane determined by the side 20 of the respective wall mould part 12 against which each of the labels 13 is held. On the side which extends along the bottom mould part 11 from Fig. 2, labels 13 are longer than the respective sides of the surfaces 18. When the mould is still open and the wall mould parts do not adjoin one another with their sides 20, said parts of the labels 13 which extend beyond the edges 21 and 21 are folded or bent along these edges. As a result thereof, the labels 13, with regard to the side which extends along the bottom mould part 11, are adapted to the respective surfaces 18 against which the labels 13 are held. The adapted labels 13 adjoin one another neatly when the mould is closed and the side surfaces 20 of the wall mould parts 12 abut one another. In the embodiment illustrated in this Fig. 2, the wall mould parts 12 are provided with cutting edges at the edges 21 and 21'. As a result of incorporating these, no separate cutting tools are necessary and a high degree of accuracy is achieved with regard to the labels 13. Upon closure of the mould, the excess length of labels 13 is trimmed by means of these cutting edges. At the edges 21 and 21', openings are provided in the side surfaces 20 of the wall mould parts 12. These openings form a space into which this excess of label 13 is accommodated when the mould is closed.

Fig. 4 shows a detailed top view of the circled part from the top right-hand side in Fig. 2 in a further embodiment. In this embodiment, separate label-treating means 22 are used to fold or cut off those parts of labels 13 which extend beyond side surfaces 20. A force F is exerted on the label-treating means 22. Said force F is directed towards the open space between side surfaces 20 of wall mould parts 12. As a result, the label-treating means 22 move in the direction of the open space between the side surfaces 20, with cutting edges incorporated in each label-treating means 22 adapting the labels 13 to the wall mould parts 12. In this case, the cutting edges incorporated in the label-treating means 22 cut off part of the labels 13 along the side surfaces 20 of wall mould parts 12. By incorporating the cutting edges in the label-treating means, the wall mould parts are simpler in terms of production and maintenance.

It will be clear that the above description is given in order to illustrate the operation of preferred embodiments of the invention, and not in order to limit the scope of the invention. Based on the above explanation, many variants will be evident to a person skilled in the art, all of which are covered by the spirit and the scope of the present invention.

## Claims

1. Plastic container having side walls that extend substantially at right angles from a bottom and which is provided on the outer surface of at least two adjoining side walls with labelling, the labelling comprising two labels which, at the corner where the adjoining side walls adjoin one another, border one another substantially seamlessly.

2. Plastic container according to Claim 1, in which the plastic container has four side walls which are each provided with labelling which, at the corners where the side walls abut one another, border one another substantially seamlessly so as to produce an apparently seamless continuous label.

3. Plastic container according to Claim 1 or 2, in which the side walls are substantially rectangular, in which, in an embodiment, the side walls have a wall part which is substantially in one plane at the location of the labels, and/or in which the labels are substantially rectangular.

4. Device for injection-moulding a plastic object provided with a label, which device comprises an injection mould, a label-application means for applying at least one label in the mould to a mould wall, and a label-treating means for making the label fitafter it has been applied to the mould wall.

5. Device according to Claim 4, in which the label-treating means is designed for folding or bending at least one edge of a label.

6. Device according to Claim 5, in which the label-treating means is designed for folding towards the interior of a mould cavity in the mould, and/or the label-treating device is designed for folding in such a manner that an edge ends up between mould parts.

7. Device according to Claims 4-6, in which the label-treating means comprises a cutting means for cutting the edges off a label.

8. Device according to one of the preceding Claims 4-7, in which the mould comprises mould parts which come together so as to enclose an injection-moulding cavity or mould cavity, and one or more of the mould parts which come together after a label has been applied comprise cutting parts, in particular mould parts which clamp together comprise cooperating cutting parts for cutting an edge off a label.

9. Method for injection-moulding a plastic container, such as a plastic crate, provided with an in-mould label on an outer surface thereof, in which a substantially plastic label is applied in a mould cavity to a mould wall and held thereon, the edges of the label are treated in order to make the label fit, following which the mould is closed and the plastic is introduced.

10. Method according to Claim 9, in which the mould comprises mould parts, the mould parts being brought into contact with one another in order to delimit the mould cavity, the mould parts being provided with cooperating cutting parts which cut the label when the mould parts are being closed.
